# EUROPEAN PATENT SPECIFICATION

(11) **EP 2 026 678 B1**
(45) Date of publication and mention of the grant of the patent: **05.04.2017**
(21) Application number: 07795958.3
(22) Date of filing: 08.06.2007
(51) Int. Cl.: A45D 40/26, A46B 9/02, B29L 31/42, B29C 45/16

(54) **ULTRA-SIZE COSMETIC APPLICATOR HAVING ENHANCED SURFACE AREA**
ÜBERGROSSER KOSMETISCHER APPLIKATOR MIT ERWEITERTEM OBERFLÄCHENBEREICH
APPLICATEUR DE GRANDE TAILLE À SURFACE OPTIMALISÉE POUR PRODUITS COSMÉTIQUES

(30) Priority: 08.06.2006 US 811856 P
(43) Date of publication of application: 25.02.2009
(73) Proprietor: Noxell Corporation, Hunt Valley, Maryland 21030-2098 (US)
(72) Inventor: RAINEY, Donald, Frank, Owings Mills, Maryland 21117 (US); LAM, Virginia, Ann, Baltimore, Maryland 21231 (US); WYATT, Peter, Jonathan, Forest Hill, Maryland 21050 (US); FABULA, Angela, Michele, Baldwin, Maryland 21013 (US); WILLIQUETTE, Matthew, Keith, Florian, Cincinnati, Ohio 45231 (US)
(74) Representative: Hoyng Rokh Monegier LLP
(86) International application number: PCT/US2007/013658
(87) International publication number: WO 2007/146212

(56) References cited:
- EP-A- 1 607 020
- WO-A-2006/125122
- AT-B- 237 807
- US-A- 5 224 787

## Description

### FIELD OF THE INVENTION

The present invention relates to cosmetic applicators, and more specifically to a cosmetic applicator comprising protrusions arranged on a thick core.

### BACKGROUND OF THE INVENTION

Mascaras are a major cosmetic product of significant importance to the cosmetic industry. They are used to enhance the beauty of a person's eyes by coating the eyelashes, and in some cases, the eyebrows, to primarily thicken, lengthen, color, curl, and otherwise define the individual lashes.

Consumers expect particular properties from their mascara products such as adhesion to the lashes, lengthening/curling of the lashes, lack of smudging or flaking, thick lashes, and good separation of clumps of lashes. Particularly, they desire long, luscious, full, soft, and well-separated lashes. Mascaras generally distribute a smooth and relatively thin (with respect to a coating thickness) film over the eyelashes producing a satisfactory array of reasonably separated lashes that are darker and thicker than bare lashes, making the eyes more noticeably beautiful. It is expected that some lash clumping will naturally occur since lashes are arranged in both rows and columns above and below one's eye. Therefore, the expression "reasonably separated" lashes is a comparative term and does not necessarily mean that every lash appears as a single entity. Mascara that is deemed by a user to separate well will leave more clumps of lashes than mascara that is deemed not to separate lashes well. Many "volumizing" (i.e., increasing volume) mascaras are messy and clumpy and tend to clump too many lashes together in a thick, less separated unit, which gives the appearance of fewer lashes.

Mascaras come in a variety of forms including cakes or blocks, creams, gels, semi-solids, and low-viscosity liquids. Cake mascaras were originally one of the most popular form of mascara, consisting of, among other things, soap and pigment mixed together to form a solid cake. With a wet cosmetic applicator, the mascara could be lathered and then applied to the lashes. This results in a satisfactory smooth application, but also in a thin cosmetic coating on the individual lashes. The primary drawback is that the film on the lashes is substantially watersoluble and therefore prone to smudging and running on the skin around the perimeter of the eye. To ameliorate this problem, waxes are incorporated into mascara compositions, thereby improving their water-resistant properties. Unfortunately, it also adversely affects the smoothness of the wax-containing mascara applications. That is, as its viscosity increases, the mascara formulation becomes increasingly harder to apply, messier, and yields lower separation of the lashes.

With the advent of "automatic" mascara applicators a means for easier mascara application have came into existence. Creams and semi-solid mascaras, for example, could be applied with these "automatic" mascara applicators - composed of a stem formed by bending a wire upon itself at a 180-degree angle and then helically twisting the two parallel strands of metal wire, where fibers are radially implanted and tightly held between the wound metal strands. A principal limitation of such an applicator is that the protrusions are randomly positioned and terminate at the wire strands in very close proximity to one another..

Molded brushes, or molded cosmetic applicators, have recently become popular, in part due to there superior performance versus twisted wire, "automatic" mascara applicators. Molded brushes can have the advantage of having their bristles, or "protrusions," formed in such a way that some or all of them terminate at the core at unique, predetermined points. In molded applicators, the desired distance between adjacent protrusions can be maintained along the length of the protrusions, and the size, shape, and relative positioning of the protrusions can be beneficially established to create a better deposition of the mascara and coverage of the lashes, as well as to achieve a superior combing and separation of the lashes.

The core and the protrusions of the molded brushes may be manufactured from a wide variety of suitable materials including, but not limited to, thermoset and thermoplastic materials and polymers, metal, wood or wood-derived products, composite, resins, and ceramic materials, and any other materials known or later developed.

Molded cosmetic applicators made of plastic are known in the art. Several international applications describe cosmetic applicators made by the injection molding process and the processes therefore. Examples include:
WO 02/03831 A1, assigned to Coronet-Werke GmbH of Germany; German patent applications DE 10201635.6, DE 10212701.8, 10221869.2, all assigned to Coronet-Werke GmbH of Germany; a copending US patent application Serial No. 60/615,864, filed on Oct. 1, 2004 in the names of Norbert Dumler et al. and assigned to The Procter & Gamble Company; a copending US patent application Serial No. 11/143,176, titled Cosmetic Applicator, filed on June 2, 2005 in the names of Peter J. Wyatt et al. and assigned to The Procter & Gamble Company; a copending US patent application Serial No. 11/143,525, titled Cosmetic Applicator, filed on June 2, 2005 in the names of Peter J. Wyatt et al. and assigned to The Procter & Gamble Company; and a copending US patent application Serial No. 11/143,176, titled Cosmetic Applicator, filed on June 2, 2005 in the names of Peter J. Wyatt et al. and assigned to The Procter & Gamble Company. The disclosures of all of these documents are incorporated herein by reference.

The molded cosmetic applicators, such as, for example, those used for mascara application to eye lashes, can be further improved. We have discovered that an applicator having protrusions arranged along an unusually thick core attached to an unusually thick stem, can provide both a thicker diameter lash clumps, and superior lash separation, thereby creating the appearance of thick, well-separated, and beautiful lashes.

US 5224787 discusses a cosmetics applicator comprising a rod having a threaded portion on the distal end of the rod. Comb points are formed at the tips of the threads for separating eyelashes. The threaded cosmetics applicator with feed channels is said to apply mid-weight thixotropic mascaras to eyelashes. The rod may have a diameter of 0.15 to 0.20 inches and the threads a depth of 0.020 to 0.030 inches.

### SUMMARY OF THE INVENTION

A cosmetic applicator of the present invention is in accordance with the claims. The cosmetic applicator of the invention can have a core surface area CA of at least about 225 square mm. A combined surface area S comprising the core surface area CA and a cumulative protrusions surface area PA can comprise at least about 850 square mm. The core can be from about 15 mm to about 35 mm in length. The protrusions can have a protrusion length of at least about 0.5 mm.

The applicator of the present invention can further comprise a bottle structured and configured to receive and contain therein a mascara composition, the core and at least portion of the stem, the bottle having an open neck, a wiper disposed therein, and a closure cap structured and configured to fit the neck of the bottle to securely close the bottle. A difference between the equivalent stem diameter and the equivalent wiper diameter can be about 3 mm or less.

Any suitable cosmetic composition can be used in the present invention. It is believed that a cosmetic composition having a viscosity of from about 3000 to about 6000 cP at 200 s⁻¹ and 1000 to 2200 cP at 1000 s⁻¹ may be especially beneficial. A yield point of the mascara composition can beneficially be about 125 Pa or less.

The applicator according to the present invention can be made of a variety of suitable materials, for example, plastic. It can be molded as a whole or partially, or otherwise constructed by means presently known in the art or later developed. For example, the cosmetic applicator can be made by a process that includes a so called "injection molding" technique.

### BRIEF DESCRIPTION OF THE DRAWINGS

- Fig. 1: is a schematic side elevational, partially cross-sectional, view of an embodiment of a cosmetic applicator according to the invention; and
- Fig. 2: is a schematic perspective view another embodiment of the cosmetic applicator, including a bottle for a mascara composition.
- Fig. 3: is a schematic side elevational view of another embodiment of a cosmetic applicator according to the invention.
- Figs. 4A and 4B: are schematic cross-sectional views of the applicator of the present invention, showing two exemplary embodiments having differential distribution of the plurality of protrusions around the core.

### DETAILED DESCRIPTION OF THE INVENTION

### Definitions

"Make-up" products are manufactured goods that are designed to leave color on a face, including eyelashes, eyebrows, cheeks, lips, etc.

"Keratinous fibers": mammalian, e.g., human or animal, hairs such as hairs on the head or body, brows and eyelashes..

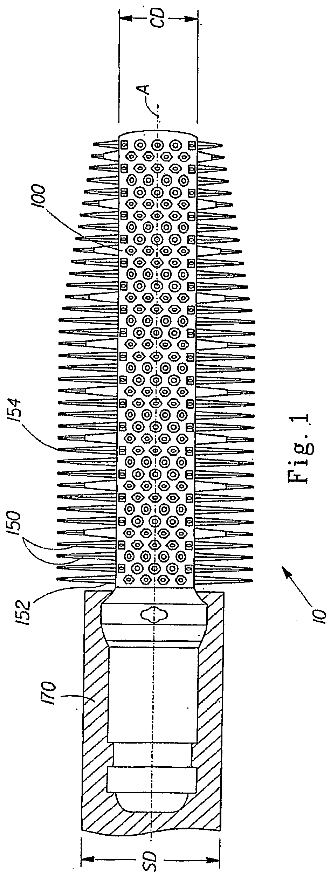

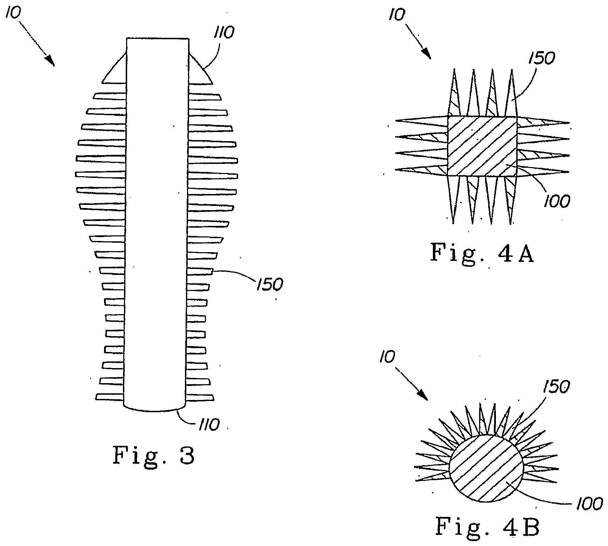

"Protrusions": a plurality of surface extensions that protrude from the core of the cosmetic applicator. The protrusions can have a protrusion length of at least about 0.5 mm. The protrusions may have differential lengths. In one embodiment, for example, the lengths of the protrusions are such that the ends of several protrusions consecutively disposed next to one another, as viewed in a cross-section of the cosmetic applicator perpendicular to the major axis, form an imaginary line that is straight. In another embodiment, such a line can be concave, convex, or broken. The protrusions may be made to gradually taper from the base towards the free end (Fig. 1). Alternatively, the protrusions may have a generally uniform thickness or taper from the free ends towards the bases of the protrusions (not shown). The protrusions may extend perpendicularly or at an angle relative to the major axis A of the core (Fig. 1). The angles between the core and the individual protrusions, or individual pluralities of the protrusions need not to be the same. For example, if the protrusions are aligned in a row on the core, an angle between the core and the protrusion or several protrusions may be the same as, or different from, an angle between the core and other protrusions within the same row. Likewise, an angle between the protrusions in one row and the core may differ from an angle between the protrusions in another row and the core. The protrusions may be disposed circumferentially (or otherwise) around the entire perimeter of the core, as viewed in cross-section perpendicular to the longitudinal axis of the applicator (Fig. 4A). Alternatively, the protrusions may be disposed only on a portion or portions of the perimeter of the core; such embodiments (Fig. 4B) include surfaces that form, in equivalent circumference, segments that are greater than 180 degrees.

"Row of protrusions": a plurality of protrusions that are arranged in a line that extends substantially through the length of the core and that can be substantially parallel to the major axis A of the core (Fig.1) or has other, for example helical, configuration (not shown). The protrusions can be arranged in a non-random and repeating pattern on the core. The protrusions are structured to pass between adjacent keratinous fibers as the applicator is directed across the keratinous fibers, particularly lashes. The primary functions of the mascara applicator's protrusions are to deposit mascara on the lashes and to separate lashes.

"Cross-section of the protrusion," or "protrusion's cross section" and the like refer to an imaginary surface of the individual protrusion formed by a "cut" therethrough perpendicular to the major axis of the protrusion. The protrusion according to the present invention can have any suitable shape in its cross-section. They can be solid or have void or voids therein. The protrusion can have a cross-section that includes, without limitation: oblong, polygon, circular, oval, curbed, rhombic, trapezoid, annular, or any other, geometrically regular or irregular, shape. The cross-sectional shape of the protrusion may also change along the length thereof. The protrusion may be gradually twisted around its longitudinal axis from the base of the protrusion to any point along its length up to and including the protrusion's free end.

"Core" means the part of the applicator's body upon which the protrusions are located, including a projected portion (110, Fig. 3), if any, located at at least one end of the core and intended primarily for expanding or otherwise manipulating a wiper (for example, for leading the core through the wiper orifice in a contraction or expansion phase thereof), rather than for deposition of mascara to the lashes. The core is attached to the stem. By "attached" it is meant that the core is either physically affixed, or joined, to the stem or that the core and the stem are built as an integral unit.

"Stem" means a part or parts of the applicator's body that can be attached to (i.e., affixed to or made integral with) the core at one of its ends. Stem can be attached to (i.e., affixed to or made integral with) a handle (not shown) at the other stem's end.

"Surface area" is defined herein, generally, as a surface that is available for mascara deposition. For example, the surface area of a hypothetical projection comprising a hollow cone having a base diameter "d" and a length "1" would be the same as that of a projection comprising a solid cone having a base diameter "d" and a length "1" (provided the interior of the hollow cone is not available for mascara deposition). A surface area of the core ("core surface area") can be computed by subtracting individual areas on the core occupied by the plurality of protrusion bases from the otherwise entire area of the core as a geometric body.

Surface Area Measurement: The relevant surface.areas can be measured by a number of methods available to one skilled in the art. For example, a method can be used that includes a creation of scanned images of the applicator, and then a computation of the relevant surface areas based on such scanned images. The data can be acquired using a micro-CT unit, such as "vivaCT" Model, available from Scano Medical, AG of Switzerland, a 3D micro-computed tomography system. The applicator can be positioned such that its longitudinal axis is parallel. to the longitudinal axis of the scanner bore. The control file used for the scans specifies an energy of 45 kVp, a current of 88 µA, and an integration time of 300 ms with no averaging. Five hundred protrusions can be acquired over a field of view with a 21.5 mm diameter (standard resolution) and a length sufficient to cover the object of interest (1300 to 1600 slices). The data from each scan can be reconstructed into a stack of 1024x1024-resolution images with a voxel resolution of 21 µm on a side. The STL files generated from CT scanning can then be cleaned by using any suitable electronic noise-removal software, for example Raindrop Geomagic Studio® software, to remove outlying other noise from the files. The surfaces of the STL files can then be smoothed to maintain an approximate 0.001-inch tolerance off of the CT data. Points can be moved 0.001 inch to smooth-out the surface-area data. The surface area can be determined by joining the various points together into an interlocking array of triangles to cover the surface of the object and calculating the area of all of the triangles together to arrive at the total surface area. This can be accomplished with a variety of software packages available on the market, for example RapidForm™.

"Equivalent Diameter" can be conveniently used herein to define a cross-sectional area of a core, a stem, or an individual protrusion regardless of whether this cross-sectional area is circular or non-circular. A cross-sectional area of any geometrical shape can be defined according to the formula: S=1/4πD², where S is the area of any geometrical shape, π = 3.14159, and D is the equivalent diameter. Using a hypothetical example, the stem's cross-sectional area S of 30 square millimeters having a rectangular shape, for example, can be expressed as an equivalent circular area of 30 square millimeters, wherein the circular area has a diameter "D." Then, the diameter D = 6.18 mm can be calculated from the formula: S=1/4πD², where S is the known area of the rectangle. In the foregoing example, the diameter D is the equivalent diameter of the hypothetical rectangular cross-section. Of course, the equivalent diameter of the stem having a circular cross-section is this circular cross-section's real diameter.. The equivalent diameter of the stem is measured or computed as the largest equivalent diameter of the stem's portion that passes through or in contact with a wiper.

"Wiper" is an element structured to control the amount of a cosmetic composition being deposited onto the core, the protrusions, and the stem of the applicator as the applicator is being withdrawn from a mascara-containing bottle. The wiper can be disposed inside the bottle at the bottle's opening end.

Fig. 1 shows an embodiment of an applicator 10 according to the present invention. The applicator comprises a substantially longitudinal thick core 100 having a longitudinal, or major, axis A, and a plurality of protrusions 150 extending from, or through, the surface of the core 100. Each protrusion 150 has a base 152 associated with the core 100 and a free end 154 opposite to the base 152. Each protrusion 150 has external walls. The walls of the protrusion 150, extending along either the protrusion's entire length or any portion thereof can be straight (shown in Fig. 1), concave, round, planar, convex, or have other, including irregular, shape. The protrusions 150 may be solid, hollow or partially solid throughout their thickness and length. The protrusions 150 can have a length equal to, or less than, an equivalent diameter of the core 100.

We have discovered that the core 100 of the applicator 10 of the present invention can advance the applicator's performance. More specifically, the performance of a cosmetic applicator could be improved if the applicator is provided with an unusually thick core. One of the advantages of the thick-core applicator 10 of the present invention is its greater surface area that can hold a greater amount of mascara composition thereon, after the applicator 10 is withdrawn from a holding bottle equipped with a wiper. The increased amount of mascara deposited on the thick core 100 is thus available for the transfer to the lashes. Moreover, the greater surface area of the core 100 facilitates a better and more even contact between the applicator 10 and the lashes, which further promotes an increased mascara transferal to the lashes. Summarizing, the thick core 100 holds more product and has more surface area for contacting the lashes to deposit mascara thereto. In addition, this can lead to a consumer taking less time to apply the mascara -- due to the increased transfer speed of mascara from the applicator 10 to the lashes and less necessity to re-dip the applicator 10 into the mascara bottle to acquire more mascara.

Furthermore, the thick core 100, having a larger surface area, has a greater useful surface for the purpose of disposing the protrusions 150 thereon. Thus, the applicator 10 of the present invention can have a greater number of protrusions 150 than a typical molded applicator. In addition, these protrusions 150 can have enlarged surface areas as well, which would allow them to carry, and apply to the lashes, even greater amounts of mascara composition. At the same time, the increased number of protrusions 150 arranged on a larger surface area of the core 100 can be beneficially spaced for superior lash separation. Thus, the applicator 10 of the present invention can provide not only a better, more rich, and highly "volumizing" deposition of the mascara to the lashes, but also a superior separation of the lashes.

The applicator of the present invention 10 can have the following parameters, which are believed to be beneficial for both a superior mascara deposition and a superior separation of lashes. The applicator 10 can have at least twelve rows of protrusions 15.0, more specifically; from twelve to thirty-two, even more specifically from fourteen to twenty-eight, still more specifically from sixteen to twenty-four, and yet even more specifically from eighteen to twenty-two rows of protrusions 150. The applicator 10 can have at least twelve protrusions 150 per row, more specifically from fourteen to twenty-four, and even more specifically from eighteen to twenty-two protrusions 150 per row. The distance between two adjacent protrusions 150 (i.e., clearance therebetween) can be at least 0.4 mm, and more specifically from 0.5 mm to 1.0 mm, as measured at the bases 152. The equivalent diameter of an individual protrusion 150 at its base 152 can be from 0.4 mm to 0.6 mm. It should be noted that these equivalent protrusion diameters may differ among the plurality of protrusions 150, if so desired.

While the individual consumers' habits and techniques of applying the mascara may influence the amount of mascara deposited and the separation level achieved, we believe that for a given, conventional and thorough technique of applying to the lashes a suitable mascara, the cosmetic applicator 10 of the present invention provides significant benefits with respect to both "volumnizing" and lash separation.

The rheology of the suitable mascara can influence the performance of the applicator 10. Ideally, a consumer wishes a mascara formulation that can be adequately transferred from the holding receptacle to the applicator and then from the applicator to the lashes. While a wide range of mascaras can achieve adequate transfer to and from the applicator 10 of the present invention, we believe that the following mascara rheolbgies, described by yield point and flow profile, are particularly beneficial. The yield point describes the stiffness of the mascara formulation, or its resistance to being moved initially. The viscosity describes the mascara formulation's reaction to stress once it starts to move. The yield point of such mascara can be not greater than about 500 Pa, more specifically not greater than about 250 Pa, even more specifically not greater than about 150 Pa, and still more specifically not greater than about 125 Pa. The viscosity of the mascara at 200 s⁻¹ can be at least about 1000 cP, more specifically at least about 1500 cP, even more specifically at least about 2500 cP, and still more specifically at least about 3000 cP. The viscosity of the mascara at 200 s⁻¹ can be 7000 cP or less, more specifically about 6000 cP or less, and even more specifically about 5500 cP or less. The viscosity of the mascara at 1000 s⁻¹ can be from about 800 cP to about 3000 cP, and more specifically from about 1000 cP to about 2200 cP.

The rheology of the mascara composition can be measured using a rheometer, such, for example, as the rheometer Haake RS 300 available from Thermo Electron Corporation of Waltham, MA. The rheometer should be correctly calibrated before measurements are taken. While a wide variety of testing surfaces can be used, one possible testing surface is 20-mm parallel plates that are held at a distance of 0.5 mm from one another. The sample should be at the temperature of 25.0 °C +/- 0.1 °C. The mascara samples must be handled with particular care, as they are typically sensitive to handling, i.e. can shear prior to measurement that would affect the results. Thus, pre-shearing of the mascara (while loading it on the rheometer) must be avoided. If the mascara formulation contains a particularly volatile solvent, a solvent trap should be used to adequately prevent the evaporation of solvent from the sample. The sample should be first allowed to equilibrate for at least 30 seconds while the testing surfaces are at their measurement positions. The plates can be held at 0.500-mm separation for 30 seconds. Then the stress can be increased, at a rate of no faster than 10 Pa per second, until the mascara begins to appreciably move. For the purposes of this test, the yield stress is defined as the stress that causes the mascara formulation to begin to move at 0.5 s⁻¹ shear rate. After the yield stress is reached, the sample should be sheared at a consistent 200 s⁻¹ for the period of three minutes. This preparation preconditions the sample for an equilibrium viscosity profile characterization where the shear rate of the sample is increased from 1 s⁻¹ to 1500 s⁻¹ over180 seconds. The viscosity flow profile that this generates can be interpreted in many ways. For example, one can pull out the viscosity at 200 s⁻¹ and 1000s⁻¹ on the flow profile as characteristic of the mascara formulation.

The core 100 the equivalent core diameter CD of at least 3.5 mm, even more specifically at least about 3.75 mm, and still more specifically at least about 4 mm. The core 100 may have the equivalent core diameter CD of not greater than about 7 mm, more specifically not greater than about 6 mm, even more specifically not greater than about 5 mm, and still more specifically not greater than about 4.5 mm. The core length can be at least about 15 mm. More specifically, the core length can be from about 20 to about 32 mm. The core surface area CA can be at least 225 square mm. More specifically, the core surface area CA can be at least about 260 square mm, even more specifically at least about 300 square mm, and still more specifically at least about 325 square mm. A combined surface area S comprising the core surface area CA and a cumulative protrusions surface area PA (i.e., CA+PA) can comprise at least about 850 square mm.

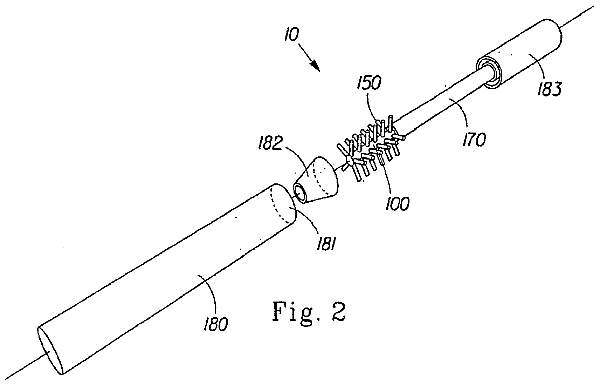

An unusually large diameter stem 170 may be required so that the difference in diameters between the stem 170 and the core 100 allows a wiper 182 of a container 180 (Fig. 2) to leave a sufficiently thick coating of cosmetic product on the core -- to enable high product transfer to the substrate. The stem 170 has the equivalent stem diameter SD of at least 5.5 mm. The stem 170 may have the equivalent stem diameter SD of not greater than about 10 mm, more specifically not greater than about 8.5mm, and even more specifically not greater than about 7 mm. The stem length can be at least about 20 mm. More specifically, the stem length can be from about 20 mm to about 80 mm. A ratio CD:SD is not greater than about 0.8. More specifically, the ratio CD:SD can be about 0.5 and greater. Even more specifically, the ratio CD:SD can be from about 0.6 to about 0.7.

The cross sectional shape of either one or both of the stem 170 and the core 100 may have circular, oval, polygonal, or any other, including irregular, suitable shape. The surface of either one or both of the stem 170 and the core 100 may have concave depressions, such as longitudinal, annular, or helical grooves, for example, or other surface texture or irregularities thereon. Such surface texture, if desired, can facilitate retention of the cosmetic composition of the core and / or stem.

The applicator of the present invention can further comprise a container, or bottle, 180 (Fig. 2). The bottle 180 is structured and configured to receive and contain therein a mascara composition, as well as the core 100 and at least a portion of the stem 170. The bottle 180 has an open neck 181 at one end thereof and a wiper 182 disposed therein. The applicator 10 may have more than one wiper, if desired. The wiper, or wipers, 182 should have an equivalent wiper diameter that can effectively remove the excess of the mascara from the protrusions 150. One skilled in the art will understand that the equivalent wiper diameter refers to the wiper's opening that is in contact with the core 100 and the stem 170 when those pass through the wiper. The equivalent wiper diameter can be at least about 4.5 mm. More specifically, the equivalent wiper diameter can be from about 4.5 mm to about 10 mm, even more specifically from about 5 mm to about 8 mm, and still more specifically from about 5.5 mm to about 7 mm. In relation to the stem 170, the wiper 182 should be constructed so as to effectively envelope the stem 170. A difference between the equivalent stem diameter and the equivalent wiper diameter may be about 3 mm or less.

The bottle 180 can further have a closure cap 183 fitting the bottle's open neck 181 and structured and configured to securely close the bottle 180 to prevent the mascara contained therein from leaking therefrom or drying out. Conveniently, the closure cap may be attached to (i.e., affixed to or made integral with) the stem 170 and serve as a handle of the applicator.

There are a wide variety of processes that can be used to produce the core 100 and protrusions 150 of the applicator 10. One non-limiting example is injection molding. One method to produce a plastic core/protrusions involves a two-step process. The applicator 10 according to the present invention can be made, at least partially, of plastic. It can be molded as a whole or partially, or otherwise constructed by means presently known in the art or later developed. For example, first, a hollow core having a multiplicity of orifices through its surface can be formed from a first plastic material. Second, a second plastic material can .be injected, under pressure, into the hollow core, so that the escaping (or "extruded") through the recesses soft plastic material forms individual protrusions as the second material solidifies. The first and second materials can be identical, or different. The position of the orifices and their shapes can be chosen to define the position of the protrusions and their cross-sectional configuration. Alternatively, the core and bristles can be formed in one injection step. Such and similar processes may involve injection molding with a hollow core having holes, wherein a protrusion material is injected through the core's holes; molding with a solid core wherein the protrusions explode through core under high pressure; a process wherein the protrusions are molded over top of the core, and a variety of other suitable processes. The core can be molded machined, otherwise formed. It can be made of plastic, metal or any other suitable material or combination of materials.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed, as "40 mm" is intended to mean "about 40 mm".

While particular embodiments of the present invention have been illustrated and described, it would be obvious to those skilled in the art that various other changes and modifications can be made without departing from the scope of the invention. It is therefore intended to cover in the appended claims all such changes and modifications that are within the scope of this invention.

## Claims

1. A cosmetic applicator (10) comprising a substantially thick core (100) having a core surface area CA, a plurality of protrusions (150) made from a plastic material extending from the core (100) and having a cumulative protrusions surface area PA, and a substantially thick stem (170) attached to the (100) core at one end thereof, the core (100) having an equivalent core diameter CD of at least 3.5 mm, and the stem (170) having an equivalent stem diameter SD, wherein a ratio CD:SD is from about 0.5 to about 0.8, and more preferably from 0.6 to 0.7; **characterized in that** the equivalent stem diameter SD is at least 5.5 mm.

2. The cosmetic applicator (10) according to claim 1, wherein the core surface area CA is at least 225 square mm.

3. The cosmetic applicator (10) according to any one of the preceding claims, wherein a combined surface area S comprising the core surface area CA and the cumulative protrusions surface area PA is at least 850 square mm.

4. The cosmetic applicator (30) according to any one of the preceding claims, wherein the core (100) has a length of from 15 mm to 35 mm.

5. The cosmetic applicator (10) according to any one of the preceding claims, wherein at least some of the protrusions (150) have a protrusion length of at least 0.5 mm.

6. The cosmetic applicator (10) according to any one of the preceding claims, further comprising a bottle (180) structured and configured to receive the core (100) and the stem (170) therein, the bottle (180) having an open neck (181); a wiper (182) disposed therein, the wiper (182) having a wiper equivalent diameter; and a closure cap (183) structured and configured to fit the neck (181) of the bottle (180) to securely close the bottle (180).

7. The cosmetic applicator (10) according to claim 6, wherein the bottle (180) contains a cosmetic composition having a viscosity of from 3000 cP to 6000 cP at 200 s⁻¹ and a yield point of not greater than 125 Pa.

8. The cosmetic applicator (10) according to any one of the preceding claims, which applicator (10) is at least partially made of plastic, wherein said applicator is at least partially molded, and is preferably at least partially made by an injection-molding process.

9. The cosmetic applicator (10) according to any one of the preceding claims, wherein the plurality of protrusions (150) comprises at least twelve rows, each row comprising at least twelve protrusions (150), each protrusion (150) having an equivalent protrusion diameter of at least 0.4 mm at a protrusion's base (152), and wherein the protrusions (150) are disposed from one another at a distance of at least 0.4 mm.

10. The cosmetic applicator (10) according to claim 6 or 7, wherein a difference between the equivalent stem diameter and the equivalent wiper diameter is not greater than 3 mm.

## Patentansprüche

1. Kosmetikapplikator (10), umfassend einen im Wesentlichen dicken Kern (100), der eine Kernoberfläche CA aufweist, eine Vielzahl von Vorsprüngen (150), die aus einem Kunststoff bestehen und von dem Kern (100) wegragen und eine kumulative Vorsprungsoberfläche PA aufweisen, und einen im Wesentlichen dicken Stamm (170), der an einem seiner Enden an dem Kern (100) befestigt ist, wobei der Kern (100) einen äquivalenten Kerndurchmesser CD von wenigstens 3,5 mm aufweist und der Stamm (170) einen äquivalenten Stammdurchmesser SD aufweist, wobei das Verhältnis CD:SD etwa 0,5 bis etwa 0,8 und besonders bevorzugt 0,6 bis 0,7 beträgt, **dadurch gekennzeichnet, dass** der äquivalente Stammdurchmesser SD wenigstens 5,5 mm beträgt.

2. Kosmetikapplikator (10) gemäß Anspruch 1, wobei die Kernoberfläche CA wenigstens 225 Quadratmillimeter beträgt.

3. Kosmetikapplikator (10) gemäß einem der vorstehenden Ansprüche, wobei eine kombinierte Oberfläche S, die die Kernoberfläche CA und die kumulative Vorsprungsoberfläche PA umfasst, wenigstens 850 Quadratmillimeter beträgt.

4. Kosmetikapplikator (30) gemäß einem der vorstehenden Ansprüche, wobei der Kern (100) eine Länge von 15 mm bis 35 mm aufweist.

5. Kosmetikapplikator (10) gemäß einem der vorstehenden Ansprüche, wobei wenigstens einige der Vorsprünge (150) eine Vorsprungslänge von wenigstens 0,5 mm aufweisen.

6. Kosmetikapplikator (10) gemäß einem der vorstehenden Ansprüche, weiterhin umfassend eine Flasche (180), die so strukturiert und konfiguriert ist, dass sie den Kern (100) und den Stamm (170) in sich aufnehmen kann, wobei die Flasche (180) einen offenen Hals (181), einen darin angeordneten Wischer (182), wobei der Wischer (182) einen äquivalenten Wischerdurchmesser aufweist, und eine Verschlusskappe (183), die so strukturiert und konfiguriert ist, dass sie in den Hals (181) der Flasche (180) passt und dadurch die Flasche (180) sicher verschließt, aufweist.

7. Kosmetikapplikator (10) gemäß Anspruch 6, wobei die Flasche (180) eine Kosmetikzusammensetzung mit einer Viskosität von 3000 cP bis 6000 cP bei 200 s⁻¹ und einer Streckgrenze von nicht mehr als 125 Pa enthält.

8. Kosmetikapplikator (10) gemäß einem der vorstehenden Ansprüche, wobei der Applikator (10) wenigstens teilweise aus Kunststoff besteht, wobei der Applikator wenigstens teilweise geformt ist und vorzugsweise wenigstens teilweise durch ein Spritzgussverfahren hergestellt ist.

9. Kosmetikapplikator (10) gemäß einem der vorstehenden Ansprüche, wobei die Vielzahl von Vorsprüngen (150) wenigstens zwölf Reihen umfassen, wobei jede Reihe wenigstens zwölf Vorsprünge (150) umfasst, wobei jeder Vorsprung (150) einen äquivalenten Vorsprungsdurchmesser von wenigstens 0,4 mm an der Basis (152) der Vorsprünge aufweist und wobei sich die Vorsprünge (150) in einem gegenseitigen Abstand von wenigstens 0,4 mm befinden.

10. Kosmetikapplikator (10) gemäß Anspruch 6 oder 7, wobei eine Differenz zwischen dem äquivalenten Stammdurchmesser und dem äquivalenten Wischerdurchmesser nicht größer als 3 mm ist.

## Revendications

1. Applicateur de cosmétique (10) comprenant une âme (100) sensiblement épaisse ayant une superficie d'âme CA, une pluralité de protubérances (150) réalisées à partir d'un matériau plastique s'étendant à partir de l'âme (100) et ayant une superficie de protubérances cumulée PA, et une tige (170) sensiblement épaisse fixée à l'âme (100) au niveau d'une de ses extrémités, l'âme (100) ayant un diamètre d'âme CD équivalent d'au moins 3,5 mm, et la tige (170) ayant un diamètre de tige SD équivalent, dans lequel un rapport CD:SD va d'environ 0,5 à environ 0,8, et de manière davantage préférée de 0,6 à 0,7; **caractérisé en ce que** le diamètre de tige SD équivalent est d'au moins 5,5 mm.

2. Applicateur de cosmétique (10) selon la revendication 1, dans lequel la superficie d'âme CA est d'au moins 225 mm carré.

3. Applicateur de cosmétique (10) selon l'une quelconque des revendications précédentes, dans lequel une superficie combinée S comprenant la superficie d'âme CA et la superficie de protubérances cumulée PA est d'au moins 850 mm carré.

4. Applicateur de cosmétique (30) selon l'une quelconque des revendications précédentes, dans lequel l'âme (100) a une longueur allant de 15 mm à 35 mm.

5. Applicateur de cosmétique (10) selon l'une quelconque des revendications précédentes, dans lequel au moins certaines des protubérances (150) ont une longueur de protubérance d'au moins 0,5 mm.

6. Applicateur de cosmétique (10) selon l'une quelconque des revendications précédentes, comprenant en outre une bouteille (180) structurée et configurée pour recevoir l'âme (100) et la tige (170) dans celle-ci, la bouteille (180) ayant un col ouvert (181); un égouttoir (182) disposé dans celle-ci, l'égouttoir (182) ayant un diamètre d'égouttoir équivalent; et un bouchon de fermeture (183) structuré et configuré pour se conformer au col (181) de la bouteille (180) pour fermer solidement la bouteille (180).

7. Applicateur de cosmétique (10) selon la revendication 6, dans lequel la bouteille (180) contient une composition de cosmétique ayant une viscosité allant de 3000 cP à 6000 cP à 200 s⁻¹ et une limite de fluage non supérieure à 125 Pa.

8. Applicateur de cosmétique (10) selon l'une quelconque des revendications précédentes, lequel applicateur (10) est au moins partiellement fait de plastique, dans lequel ledit applicateur est au moins partiellement moulé, et est de préférence au moins partiellement fabriqué par un procédé de moulage par injection.

9. Applicateur de cosmétique (10) selon l'une quelconque des revendications précédentes, dans lequel la pluralité de protubérances (150) comprend au moins douze rangées, chaque rangée comprenant au moins douze protubérances (150), chaque protubérance (150) ayant un diamètre de protubérance équivalent d'au moins 0,4 mm au niveau de la base (152) d'une protubérance, et dans lequel les protubérances (150) sont disposées à une distance les unes des autres d'au moins 0,4 mm.

10. Applicateur de cosmétique (10) selon la revendication 6 ou 7, dans lequel une différence entre le diamètre de tige équivalent et le diamètre d'égouttoir équivalent est non supérieure à 3 mm.
